# EUROPÄISCHE PATENTSCHRIFT

(11) **EP 1 912 002 B1**
(45) Veröffentlichungstag und Bekanntmachung des Hinweises auf die Patenterteilung: **19.01.2011**
(21) Anmeldenummer: 07019827.0
(22) Anmeldetag: 10.10.2007
(51) Int. Cl.: F16K 24/04, B60K 15/035

(54) **Entlüftungsventil für den Kraftstofftank eines Kraftfahrzeugs**
Ventilation valve for the fuel tank of a motor vehicle
Soupape de purge d'air pour le réservoir de carburant d'un véhicule automobile

(30) Priorität: 10.10.2006 DE 102006048183
(43) Veröffentlichungstag der Anmeldung: 16.04.2008
(73) Patentinhaber: Alfmeier Präzision AG Baugruppen und Systemlösungen, 91757 Treuchtlingen (DE)
(72) Erfinder: Theissler, Jürgen, 91522 Ansbach (DE); Roscher, Richard, 91799 Langenaltheim (DE)
(74) Vertreter: Mörtel & Höfner

(56) Entgegenhaltungen:
- US-A- 5 605 175
- US-A1- 2005 126 633
- US-B1- 6 206 057

## Beschreibung

Die Erfindung betrifft ein Entlüftungsventil für den Kraftstofftank eines Kraftfahrzeugs. Ein solches Ventil dient beispielsweise dazu, während des Fahrzeugbetriebes eine Be- und Entlüftung des Tanks zu gewährleisten oder den Füllstand des Kraftstoffs beim Betanken zu begrenzen. Ventile für den letztgenannten Anwendungsfall werden auch als fill limit vent-valves (FLVV) bezeichnet. Sie weisen einen Schwimmer auf, der mitteloder unmittelbar mit einer Dichteinrichtung verbunden ist, welche eine mit der Umgebung in Verbindung stehende Belüftungsöffnung des Ventilgehäuses, beispielsweise wenn beim Tanken der Kraftstofffüllstand eine vorgegebene Höhe erreicht hat, verschießt. Problematisch bei derartigen Ventilen ist, dass der Schwimmer während des Fahrzeugbetriebs durch hochschwappenden Kraftstoff angehoben und die Belüftungsöffnung des Ventils verschlossen werden kann. Dabei kann sich etwa durch verdampfenden Kraftstoff ein Innendruck aufbauen, der auf die Dichteinrichtung, im einfachsten Fall eine Scheibe aus Elastomermaterial, eine Kraft ausübt, die die Gewichtskraft des Schwimmers übersteigt, so dass die Belüftungsöffnung zumindest für eine gewisse Dauer verschlossen bleibt. Es besteht somit die Gefahr, dass durch den Innendruck der Tank beschädigt wird. Um diese Gefahr zu verringern werden unter anderem zweistufige Ventile eingesetzt. Bei diesen beispielsweise aus US 2005/0126633 A1 bekannten Ventilen ist eine Dichteinrichtung vorhanden, bei der zunächst ein kleinerer Öffnungsquerschnitt freigegeben wird, was aufgrund der kleineren Fläche, auf die der Innendruck wirken kann, einen geringeren Kraftaufwand erfordert. Der Innendruck kann sich dann soweit abbauen, bis schließlich das Gewicht des Schwimmers ausreicht, um die Dichteinrichtung von einem zweiten größeren Öffnungsquerschnitt, der beispielsweise etwa der Querschnittsfläche der Belüftungsöffnung entspricht, zu entfernen. Da der erste Öffnungsquerschnitt nicht zu groß gewählt werden kann, um das Öffnen der ersten Stufe auch bei größeren Innendrücken zu ermöglichen, dauert es relativ lange, bis sich der Innendruck auf einen das Öffnen der zweiten Ventilstufe erlaubenden Wert abgebaut hat.

Aufgabe der Erfindung ist es, ein Entlüftungsventil vorzuschlagen, das hinsichtlich seines Wiederöffnungsverhaltens nach einem durch einen Tankinnendruck verursachten Verschluss der Belüftungsöffnung verbessert ist.

Diese Aufgabe wird bei einem Entlüftungsventil der eingangs genannten Art dadurch gelöst, dass dieses eine mindestens dreistufige Dichteinrichtung umfasst. Dadurch ist generell ein schnelleres Wiederöffnen möglich. So kann eine erste Stufe mit relativ kleinem Öffnungsquerschnitt vorgesehen werden, die auch bei hohen Tankinnendrücken öffnet. Da aber noch mindestens zwei weitere Ventilstufen vorgesehen sind, erfolgt je nach Auslegung und Anzahl der Stufen schon nach kurzer Zeit ein Öffnen der nächsten Stufe, so dass der Druckabbau aufgrund des jeweils größeren Öffnungsquerschnitts weiter beschleunigt wird. Die Dichteinrichtung weist die folgende Ausgestaltung auf:

Sie umfasst mehrere längs der Mittellängsachse hintereinander angeordnete Träger, die jeweils von einem koaxial zur Mittellängsachse verlaufenden Durchgangskanal durchsetzt sind. An den der Belüftungsöffnung zugewandten Oberseiten und an den dem Schwimmer zugewandten Unterseiten der Träger ist jeweils ein zur Mittellängsachse koaxiales Dichtelement angeordnet. Dabei wäre es denkbar, dass die Träger und die daran vorhandenen Dichtelemente einstückig, beispielsweise als Spritzgussteil ausgebildet sind. Vorzugsweise sind aber die Dichtelemente separate Teile, die im Hinblick auf ihre Dichtfunktion aus einem beispielsweise weichen und elastischen Material bestehen. Die Träger sind jeweils in Richtung der Mittellängsachse des Ventilgehäuses relativ zueinander und relativ zum Schwimmer um eine vorgegebene Strecke zwischen einer Schließstellung und einer Öffnungsstellung beweglich. Auf diese Weise ist gewährleistet, dass die Träger und ihre Dichtelemente in zeitlicher Abfolge nacheinander voneinander entfernt (Öffnungsstellung) und - bei nach oben aufsteigenden Schwimmer wieder einander angenähert werden können und schließlich gegeneinander gedrückt werden, wobei der oberste Träger die Belüftungsöffnung verschließt (Schließstellung). Im letztgenannten Fall, also jeweils in der Schließstellung eines Trägers, liegt dessen oberseitiges Dichtelement an dem unterseitigen Dichtelement eines benachbarten Trägers und im Falle des der Belüftungsöffnung nächst liegenden obersten Trägers dessen oberseitiges Dichtelement an einem Gegen-Dichtelement an, wobei dieses ein unterseitiges Dichtelement eines Trägers oder ein die Belüftungsöffnung umgreifenden Dichtelement ist. Dabei umgrenzen jeweils zwei einander zugeordnete Dichtelemente einen Öffnungsquerschnitt. Die Größe der aufeinanderfolgenden jeweiligen Öffnungsquerschnitte, die letztlich die einzelnen Stufen des Ventils repräsentieren nimmt zum Schwimmer hin ab, wobei die Abstufung der einzelnen Öffnungsquerschnitte einen großen Spielraum hinsichtlich der Öffnungscharakteristik des Ventils erlaubt.

Miteinander zusammenwirkende Dichtelemente können im Grunde beliebig ausgestaltet sein. So ist es etwa denkbar, dass ein Dichtelement ein flächiger oder auch in Form eines Ringvorsprungs ausgebildeter Dichtsitz ist, und dass ein damit zusammenwirkendes Dichtelement eine ringförmige Dichtlippe oder ein eine planebene Dichtfläche aufweisender Dichtring ist. Entscheidend ist nur, dass ein Dichtelementpaar so zusammenwirkt, dass ein Öffnungsquerschnitt dichtend umgrenzt wird.

Weitere vorteilhafte Ausgestaltungen werden in der folgenden Beschreibung, die auf die beigefügten Zeichnungen Bezug nimmt, näher erläutert. Es zeigen:
- Fig. 1: einen Längsschnitt durch ein Entlüftungsventil mit einer dreistufigen, zwei Träger umfassenden Dichteinrichtung,
- Fig. 2: einen Längsschnitt durch die Dichteinrichtung,
- Fig. 3: eine perspektivische Ansicht der Dichteinrichtung,
- Fig. 4: eine perspektivische Explosionsdarstellung des Ventils von Fig. 1,
- Fig. 5: eine perspektivische Darstellung der Dichteinrichtung in einer Fig. 3 entsprechenden Darstellung, jedoch mit einer anderen gegenseitigen Position der Träger,
- Fig. 6: einen Längsschnitt durch die Dichteinrichtung von Fig. 5,
- Fig. 7: eine durch einen Längsschnitt erzeugte Hälfte des Ven- tils von Fig. 1 in perspektivischer Darstellung,
- Fig. 8: eine perspektivische Ansicht einer vierstufigen Dicht- einrichtung, wobei deren insgesamt drei Träger axial von einander entfernt sind,
- Fig. 9: die Dichteinrichtung von Fig. 8 in Seitenansicht, wobei die Träger aneinander anliegen,
- Fig. 10: die Dichteinrichtung von Fig. 9, um 90 ° um ihre Mit- tellängsachse gedreht,
- Fig. 11: einen Längsschnitt entsprechend der Linie XI - XI in Fig. 8,

Ein erfindungsgemäßes Entlüftungsventil, im vorliegenden kurz mit Ventil 1 bezeichnet, umfasst ein beispielsweise zylindrisches Gehäuse 2, an dessen Unterseite ein Boden 3 angeformt ist und das an seiner Oberseite mit einem Deckel 4 verschlossen ist. Der Deckel 4 weist an einer etwa zentralen Position einen Stutzen 5 auf, der eine Belüftungsöffnung 6 umgrenzt. Auf den Deckel 4 ist ein Flansch 7 aufgesetzt, mit dem das Ventil 1 an einer oberen Tankwand fixierbar ist. Das Gehäuse 2 ragt dabei über eine Tanköffnung in das Tankinnere hinein. Der Flansch 7 weist einen Anschluss 8 auf, mit dem eine Belüftungsleitung verbindbar ist. Der Anschluss 8 ist von einem Belüftungskanal 9 durchsetzt, der mit der Belüftungsöffnung 6 in Verbindung steht. Eine gasdichte Abdichtung zwischen dem Stutzen 5 des Deckels 4 und dem Flansch 7 wird über einen O-Ring 10 erreicht, der in einer Umfangsnut 11 des Stutzens 5 einliegt.

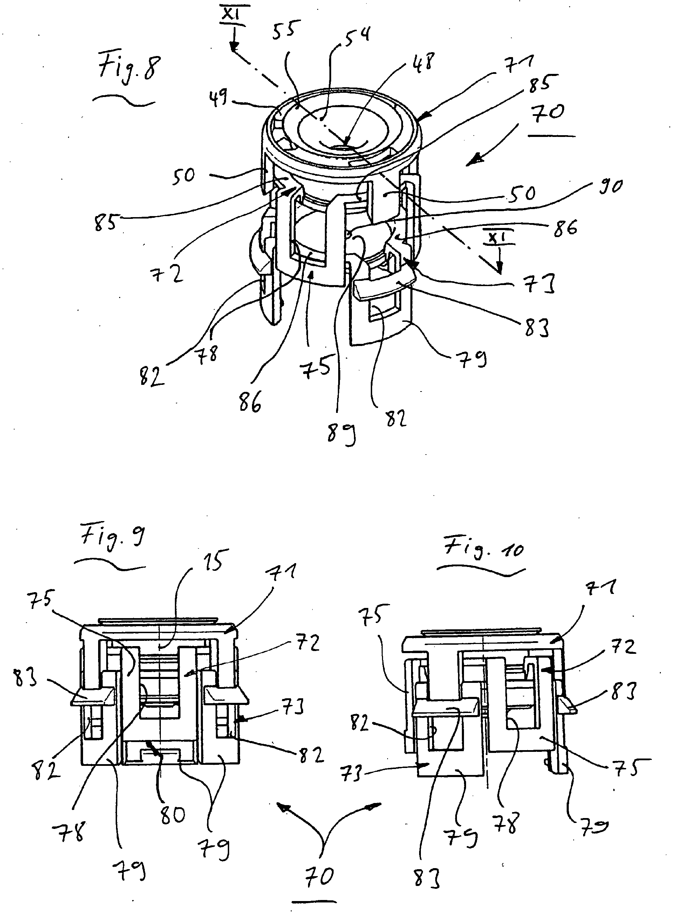

An der Unterseite des Deckels 4 ist ein eine etwa zylinderförmige Umfangswand (12a) aufweisender Käfig 12 angeformt, der unterseits geöffnet ist und der eine Dichteinrichtung 13 (bzw. 70 im Falle Fig. 8-11) axialbeweglich aufnimmt. Die Dichteinrichtung 13 (ebenso 70) ist mit einem Schwimmer 14 verbunden, der in Richtung der Mittellängsachse 15 des Gehäuses 2 beweglich ist. Der Schwimmer 14 ist innen hohl und weist einen zentralen, sich bis etwa zu seinem unteren Ende erstreckenden Zapfen 16 auf, der in einer Führungshülse 17 axial beweglich gehalten ist. Die Führungshülse 17 ist an den Boden 3 angeformt, wobei ihr Innenraum über eine Öffnung 18 im Boden mit dem Tankinnenraum in Verbindung steht. Von der Innenwandung des Schwimmers 14 springen radial nach innen etwa plattenförmige Rippen 19 vor. Innerhalb des von den Rippen 19 umgrenzten zentralen Raum des Schwimmers ist eine Schraubendruckfeder 20 angeordnet, die den Schwimmer 14 mit einer nach oben, d.h. auf die Entlüftungsöffnung 6 hin gerichteten Kraft beaufschlagt. Der Schwimmer 14 weist einen oberen Längsabschnitt 22 mit verringertem Durchmesser auf. An die Stirnseite des Längsabschnitts 22 ist ein radial nach außen vorstehender Flansch 23 angeformt, dessen Unterseite eine sich etwa in einer Radialebene (radial in Bezug auf die Mittellängsachse 15) verlaufende Anschlagfläche 24 aufweist.

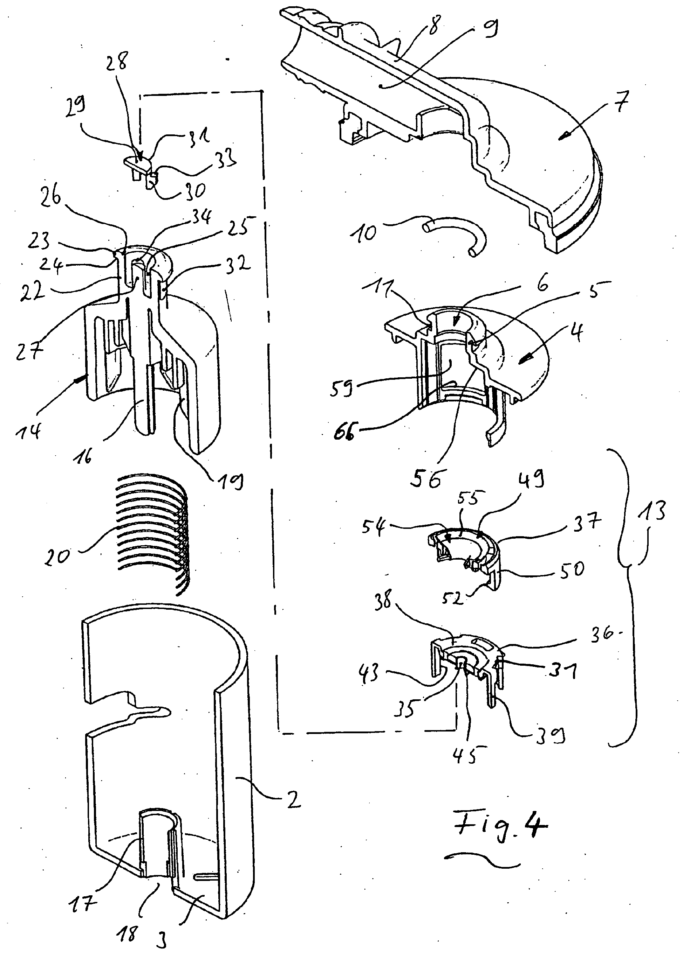

In der Stirnseite 26 des Längsabschnitts 22 ist eine zentrale Ausnehmung 25 vorhanden, von deren Boden sich ein koaxial zur Mittellängsachse 15 angeordneter Zapfen 27 in Axialrichtung weg erstreckt. Der Zapfen 25 endet mit Axialabstand vor der Stirnseite 26 des Längsabschnitts 22. Die Ausnehmung 25 ist aufgrund der Anwesenheit des Zapfens 27 im Querschnitt bzw. in der Draufsicht von oben gesehen ringförmig. In der Ausnehmung 25 ist ein Dichtelement 28 angeordnet. Dieses wird von einer beispielsweise kreisscheibenförmigen Platte 29 und mehreren Stegen 30 gebildet. Die Stege 30 sind an der Unterseite bzw. an der der Belüftungsöffnung 6 abgewandten Seite der Platte 29 angeordnet und sind über deren Umfang gleichmäßig verteilt. Die Stege 30 sind radial verbreitert und stehen in gewissem Ausmaß über den Rand 31 der Platte 29 hinaus. Die Stege 30 sind in der ringförmigen Ausnehmung 25 angeordnet. Die Platte 29 liegt mit der Unterseite auf dem Zapfen 27 auf. Die Stege 30 ragen jeweils in ein ihnen zugeordnetes Fenster 32 (Fig. 4) im Längsabschnitt 22 hinein. Die Fenster 32 erstrecken sich in Richtung der Mittellängsachse 15, wodurch eine gewisse axiale Beweglichkeit des Dichtelements 28 gegeben ist. Die Stege 30 weisen eine etwa in einer Radialebene verlaufende Anschlagfläche 33 auf, die mit dem oberen Randbereich 34 (Fig. 4) eines Fensters 32 zusammen wirkt. Das Dichtelement 28 ist weiterhin in der Ausnehmung 25 mit gewissem Radialspiel geführt, so dass sich die Platte 29 gegenüber der Mittellängsachse 15 leicht verkippen bzw. schräg stellen kann.

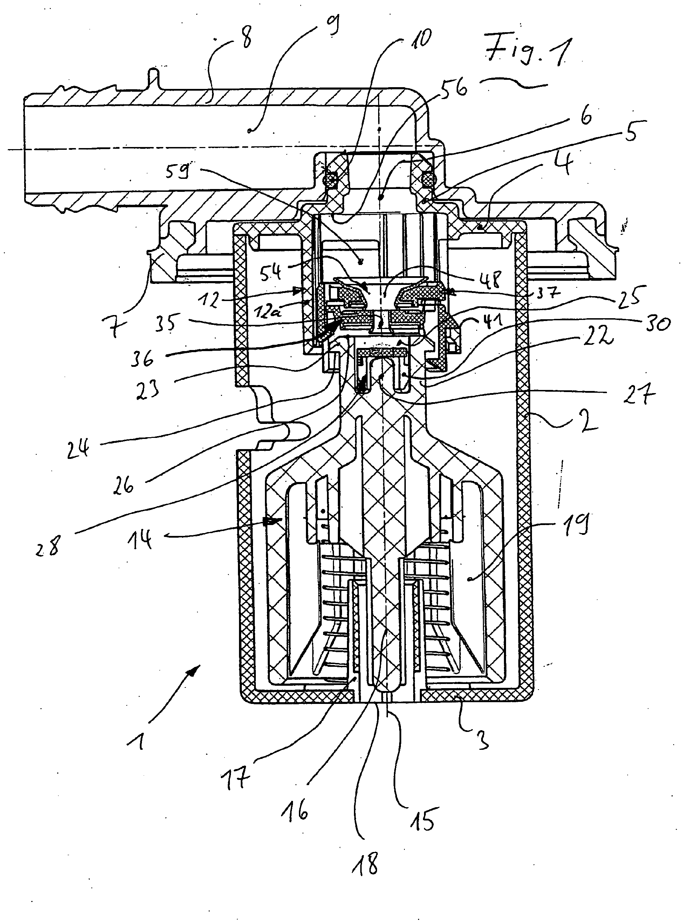

Die oben bereits erwähnte Dichteinrichtung 13 die eine im Wesentlichen kreisrunde Umrissform aufweist, setzt sich im Wesentlichen aus einem unteren Träger 36 und einem oberen Träger 37 zusammen. Die Träger 36, 37 sind längs der Mittellängsachse 15 hintereinander angeordnet und sind jeweils von einem koaxial zur Mittellängsachse 15 verlaufenden Durchgangskanal 35 bzw. 48 durchsetzt. An den der Belüftungsöffnung 6 zugewandten Oberseiten und an den dem Schwimmer 14 zugewandten Unterseiten der Träger 36, 37 ist jeweils ein zur Mittellängsachse 15 koaxiales Dichtelement 45, 51, 57, 55 angeordnet. Die Träger 36, 37 sind jeweils in Richtung der Mittellängsachse 15 des Ventilgehäuses 2 relativ zueinander und relativ zum Schwimmer um eine vorgegebene Strecke zwischen einer Schließstellung und einer Öffnungsstellung beweglich. In der Schließstellung des unteren Trägers 36 liegt dessen oberseitiges, als planebener Dichtsitz ausgebildetes Dichtelement 51 an dem unterseitigen, in Form einer Ringlippe vorstehenden Dichtelement 57 des oberen Trägers 37 an. In der Schließstellung des oberen Trägers 37 wirkt dessen oberseitiges Dichtelement 55, das eine aus der Oberseite des Trägers 37 vorstehende Ringlippe ist, mit einem die Belüftungsöffnung 6 umgrenzenden, als planebener Dichtsitz ausgestalteten Dichtelement 56 (Fig. 1) zusammen. Das unterseitige Dichtelement 45 des unteren Trägers 36, das eine vorstehende Ringlippe ist, wirkt mit dem am Schwimmer 14 vorhandenen Dichtelement 28 zusammen. Jeweils zwei einander zugeordnete Dichtelemente 55/56, 51/57, 45/28 umgrenzen einen Öffnungsquerschnitt 61,62,63, wobei die Größe der aufeinanderfolgenden Öffnungsquerschnitte zum Schwimmer 14 hin abnimmt. Der Öffnungsquerschnitt 62 (Dichtelementpaar 55/56) ist somit kleiner als der Öffnungsquerschnitt 61 (Dichtelementpaar 51/57) und größer als der Öffnungsquerschnitt 63 (Dichtelementpaar 45/28). Die genannten Dichtelementpaarungen 55/56, 51/57, 45/28 bilden die drei Stufen des Ventils.

Der untere Träger 36 ist im Wesentlichen von einer Kreisscheibe 38 und mehreren über deren Umfang verteilten, von ihrem Rand 31 sich in Richtung der Mittellängsachse 15 nach unten wegerstreckenden, nach Art von Kreisbogenförmig gekrümmten Wandabschnitten ausgebildeten Armen 39 gebildet. An den Freienden der Arme 39 sind radial nach innen ragende Vorsprünge 40 angeformt. Zur Fixierung des unteren Trägers 36 wird dieser auf den Längsabschnitt 22 des Schwimmers 14 aufgesetzt, wobei die Vorsprünge 40 mit Schrägflächen 42 auf den Flansch 23 auftreffen und dabei radial nach außen bewegt werden. Nachdem die Vorsprünge 40 den Flansch 23 passiert haben, bewegen sie sich wieder radial nach innen. Die Vorsprünge 40 wirken dann mit der Anschlagfläche 24 des Flansches 23 im Sinne eines axial wirksamen Hinterschnittes zusammen, wodurch der Träger 36 mit Axialspiel am Längsabschnitt 22 fixiert ist.

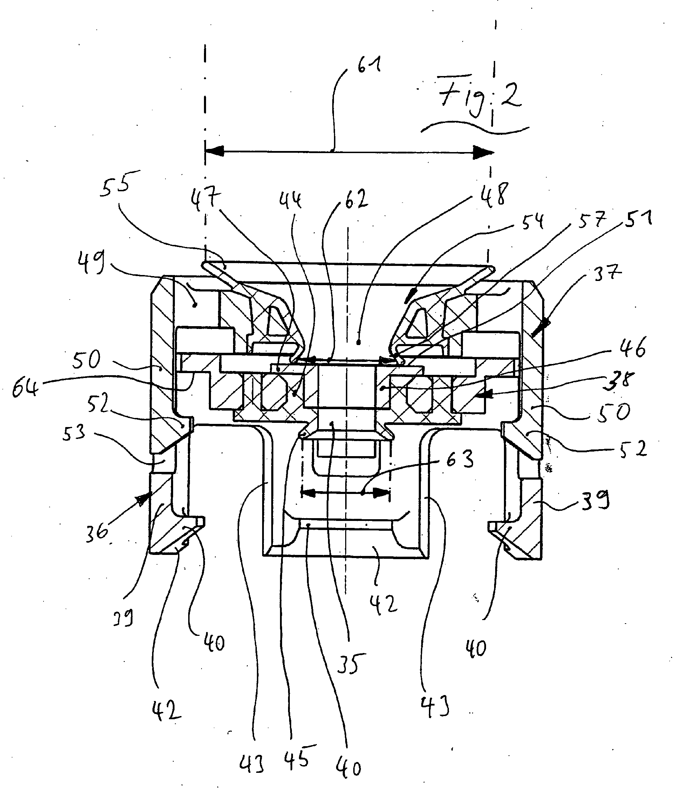

Die insgesamt drei Arme 39 sind in Umfangsrichtung durch Ausnehmungen 43 voneinander getrennt und in Umfangsrichtung gleichmäßig verteilt. Die Kreisscheibe 38 ist zentral von einem sich koaxial zur Mittellängsachse 15 erstreckenden Durchgangskanal 35 durchsetzt. Ein innerer an den Durchgangskanal 35 angrenzender Bereich 44 (Fig. 2) der Kreisscheibe 38 besteht aus Elastomermaterial. Dieses steht an der Unterseite der Kreisscheibe 38 in Form des sich trichterförmig öffnenden Dichtelements 45 hervor. Die Querschnittsfläche des Durchgangskanals 35 ist wesentlich kleiner als die Querschnittsfläche der Belüftungsöffnung 6. Die axiale Länge der Arme 39 und die axiale Position der sich daran befindlichen Vorsprünge 40 ist so gewählt, dass der untere Träger 36 axial beweglich am Schwimmer bzw. an dessen Längsabschnitt 22 gehalten ist. Das Dichtelement 28 kann sich somit, wenn sich der Schwimmer 14 - ausgehend von einem verschlossenen Ventil - nach unten bewegt, von dem Dichtelement 45 des Trägers 36 entfernen, wodurch der Öffnungsquerschnitt 63 freigegeben wird. Oberseits ist in die Kreisscheibe 38 ein im Wesentlichen rohrabschnittförmiges Teil 46 eingesetzt, welches den oberen Längsabschnitt des Durchgangskanals 35 umgrenzt und an dessen oberer Stirnseite ein sich radial erstreckender Flansch 47 angeformt ist, welcher auf der Oberseite der Kreisscheibe 38 aufliegt. Die Oberseite des Flansches 47 bildet das Dichtelement 51, welches mit dem Dichtelement 57 des oberen Trägers 37 zusammen wirkt.

Der obere Träger 37 ist im Wesentlichen von einem Kreisring 49 gebildet, an dessen Unterseite sich die axial bzw. in Richtung der Mittellängsachse 15 erstreckende, ebenfalls nach Art von kreisbogenförmig gekrümmten Wandabschnitten ausgebildete Arme 50 angeformt sind. Die Arme 50 sind gleichmäßig über den Umfang des Kreisrings 49 verteilt. An ihren Freienden sind Vorsprünge 52 angeformt, die radial nach innen vorstehen. Die Vorsprünge 52 hintergreifen eine zum Schwimmer 14 weisende Anschlagfläche 64 (Fig. 2) an der Unterseite des unteren Trägers 36.

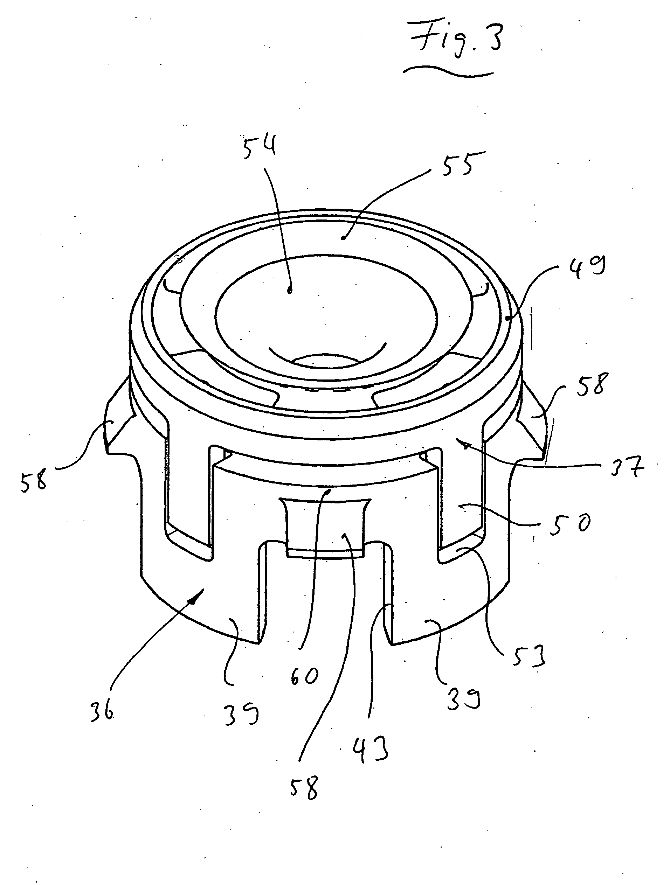

Unabhängig davon, ob die Dichteinrichtung 13 zwei oder mehr Träger umfasst, ist es vorteilhaft, wenn ein die eine Anschlagfläche 64 tragender bzw. von einem Vorsprung hintergriffener Bereich 65 eines Trägers zumindest um ein der Dicke eines Armes entsprechendes Ausmaß radial nach innen zurückversetzt ist. Bei dem Ausführungsbeispiel gem. Fig. 1 bis 7 wird dies dadurch bewerkstelligt, dass in den Armen 39 des unteren Trägers 36 sich nach oben öffnende Fenster 53 vorhanden sind, in welche jeweils ein Arm 50 des oberen Trägers 37 zumindest teilweise hinein geschoben werden kann. Die Länge der Arme 50 und die axiale Position der Vorsprünge 52 sind in Axialrichtung so bemessen, dass der zweite Träger 37 axial beweglich am ersten Träger 36 fixiert ist. Somit ist gewährleistet, dass das oberseitige Dichtelement 51 des unteren Trägers 36 und das unterseitige Dichtelement 57 des oberen Trägers 37 in gegenseitigen Kontakt gebracht und wieder voneinander entfernt werden können.

Der Kreisring 49 trägt ein Elastomerelement 54, das im Wesentlichen als ein sich zur Belüftungsöffnung 6 hin öffnender Trichter ausgebildet ist, wobei dessen oberer, axial über den Kreisring 49 hinausstehender Rand das Dichtelement 55 bildet, das mit dem die Belüftungsöffnung 6 umgrenzenden Dichtelement 56 zusammenwirkt. Der untere Rand des Elastomerelements 54, der das Dichtelement 57 bildet, erweitert sich ebenfalls trichterförmig und ragt aus der Unterseite des Trägers 37 heraus.

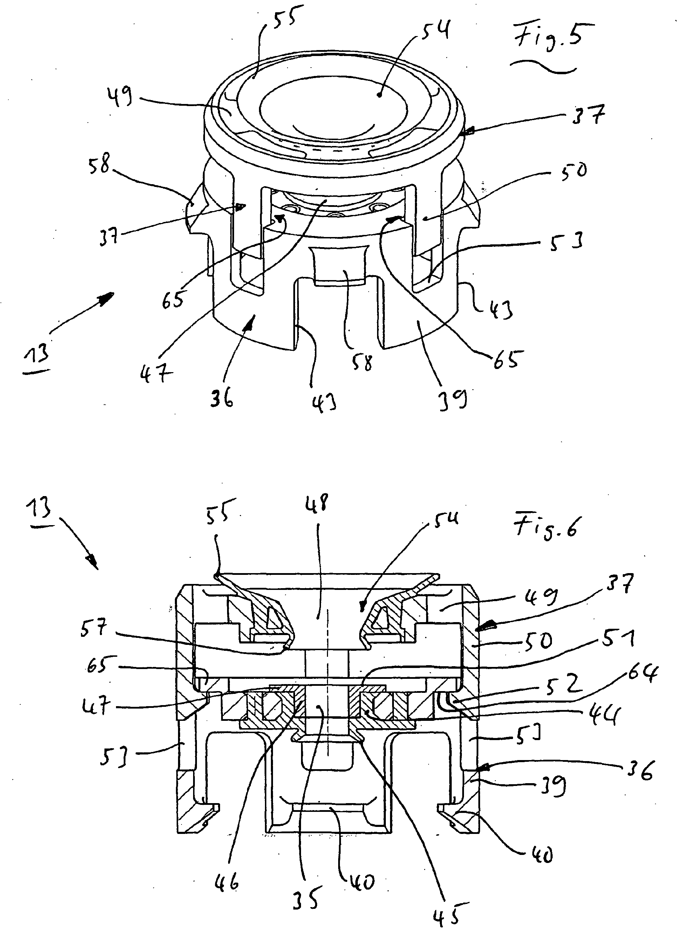

Die Fixierung der Dichteinrichtung 13 im Käfig 12 mit axialer Beweglichkeit wird dadurch bewerkstelligt, dass am ersten Träger radial nach außen vorstehende Rastvorsprünge 58 in Fenstern 59 eingreifen, welche im Käfig 12 vorhanden sind, und jeweils mit dem unteren Rand 66 (Fig. 6) eines Fensters 59 zusammenwirken. Die Rastvorsprünge 58 sind an Wandbereichen 60 des ersten Trägers 36 angeordnet, welche zwei in Umfangsrichtung benachbarte Arme 39 miteinander verbinden.

Das oben beschriebene Ventil bzw. dessen Dichteinrichtung 13 ist 3-stufig ausgestaltet. Es sind natürlich auch mehr als 3 Stufen, etwa 4, 5 oder auch mehr denkbar, die beispielsweise auf die oben beschriebene Art realisiert sind. Durch eine größere Anzahl von Stufen lässt sich ein kontinuierliches Öffnen der Belüftungsöffnung erreichen, d.h. die Druckunterscheide zwischen den einzelnen Stufen sind umso geringer je mehr Stufen vorhanden sind.

Im folgenden wird die Arbeitsweise des Ventils 1 kurz erläutert: Die Belüftungsöffnung 6 wird geschlossen, wenn sich der Schwimmer 14, etwa aufgrund eines ansteigenden Kraftstoffpegels nach oben bewegt. Im geschlossenen Zustand wird das Dichtelement 28 bzw. dessen Platte 29 gegen das unterseitige Dichtelement 45 des unteren Trägers 36, die Oberseite des Flansches 47 bzw. das Dichtelement 51 gegen das unterseitige Dichtelement 57 des oberen Trägers 37 und dessen oberseitiges Dichtelement 55 gegen das die Belüftungsöffnung 6 umgreifende Dichtelement 56 gedrückt. Bei fehlendem oder geringem Tankinnendruck reicht das Gewicht des Schwimmers 14 aus, um die Dichteinrichtung 13 insgesamt axial nach unten zu bewegen, wodurch die Belüftungsöffnung 6 freigegeben wird. Wenn sich jedoch während des Verschlusses der Belüftungsöffnung 6 ein Tankinnendruck aufbaut, kommt die Mehrstufigkeit der Dichteinrichtung 13 bzw. des Ventils 1 zum Tragen. Zunächst wird das Dichtelement 28 vom unteren Träger entfernt, wobei der Öffnungsquerschnitt 63 freigegeben wird und Gas (= Kraftstoffdampf-Luft-Gemisch) über die miteinander in Verbindung stehenden Durchgangskanäle 35, 48 und über die Belüftungsöffnung 6 nach außen strömen kann, wodurch sich der Tankinnendruck teilweise abbaut. Der Schwimmer 14 liegt mit seinem Flansch 23 auf den Vorsprüngen 40 des unteren Trägers 36 auf, so dass dieser mit dem Gewicht des Schwimmers belastet ist. Wenn der Tankinnendruck einen entsprechenden Grenzwert erreicht hat, reicht die vom Gewicht des Schwimmers 14 auf den unteren Träger 36 ausgeübte Kraft aus, um diesen axial nach unten zu bewegen, wodurch der Öffnungsquerschnitt 62 freigegeben wird. Nun kann ein wesentlich größerer Gasstrom den Tankinnenraum über den Durchgangskanal 48 und die Belüftungsöffnung 6 verlassen. Es wird nun schnell ein Druckwert erreicht, bei dem die durch das Gewicht des Schwimmers 14 und das Gewicht des ersten Trägers 36 auf den zweiten Träger 37 ausgeübte Kraft ausreicht, um auch diesen axial nach unten zu bewegen. Dabei liegt der untere Träger 36 auf den Vorsprüngen 52 des oberen Trägers 37 auf. Letzterer wird dadurch axial nach unten mitgenommen, wobei dessen oberseitiges Dichtelement 55 von dem die Belüftungsöffnung 6 umgreifenden Dichtelement 56 entfernt und der Öffnungsquerschnitt 61 freigegeben wird. Sodann ist eine Be- und Entlüftung des Tanks wieder möglich, wobei sich ein noch verbleibender Tankinnendruck über die Belüftungsöffnung 6, deren Strömungsquerschnitt geringfügig kleiner ist als der Öffnungsquerschnitt 61, vollständig abbauen kann.

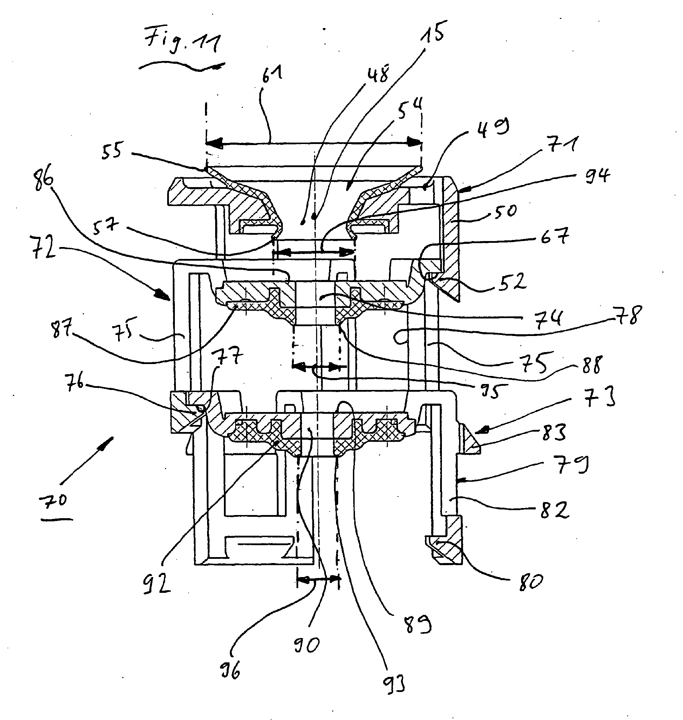

In den Abbildungen Fig. 8 bis 11 ist eine Dichteinrichtung 70 gezeigt, die in einem Ventil der vorbeschriebenen Art einsetzbar ist. Die Dichteinrichtung 70 ist vierstufig, sie umfasst insgesamt drei Träger, nämlich einen oberen Träger 71, einen darunter angeordneten mittleren Träger 72 und schließlich einen unter diesem angeordneten unteren Träger 73. Der obere Träger 71 weist eine Ausgestaltung auf, die jener des oberen Trägers 37 des weiter oben beschriebenen Ausführungsbeispiels entspricht. Die an den Armen 50 vorhandenen Vorsprünge 52 hintergreifen eine unterseits am mittleren Träger 72 vorhandene Anschlagfläche 67. Dementsprechend sind gleiche bzw. gleichwirkende Einzelteile mit den gleichen Bezugszeichen versehen. Der mittlere Träger 72 ist etwa scheibenförmig ausgestaltet und ist von einem zentralen, sich koaxial zur Mittellängsachse 15 des Ventils 1 bzw. der Dichteinrichtung 70 erstreckenden Durchgangskanal 74 durchsetzt. Der Durchmesser des Durchgangskanals 74 ist kleiner als der kleinste Durchmesser des Durchgangskanals 48 des oberen Trägers 71. Der mittlere Träger 72 umfasst randständige, d.h. einen Radialabstand zur Mittellängsachse 15 und einen Abstand in Umfangsrichtung aufweisende, etwa nach Art von kreisbogenförmigen Wandsegmenten ausgebildete Arme 75, an deren Freienden jeweils ein radial nach innen ragender Vorsprung 76 vorhanden ist, welcher eine unterseits am unteren Träger 73 vorhandene Anschlagfläche 77 (Fig. 11) hintergreift. Die Arme 75 weisen ein sich nach oben öffnendes Fenster 78 auf, sind daher, wie der Seitenansicht gem. Fig. 9 und 10 entnehmbar ist, u-förmig.

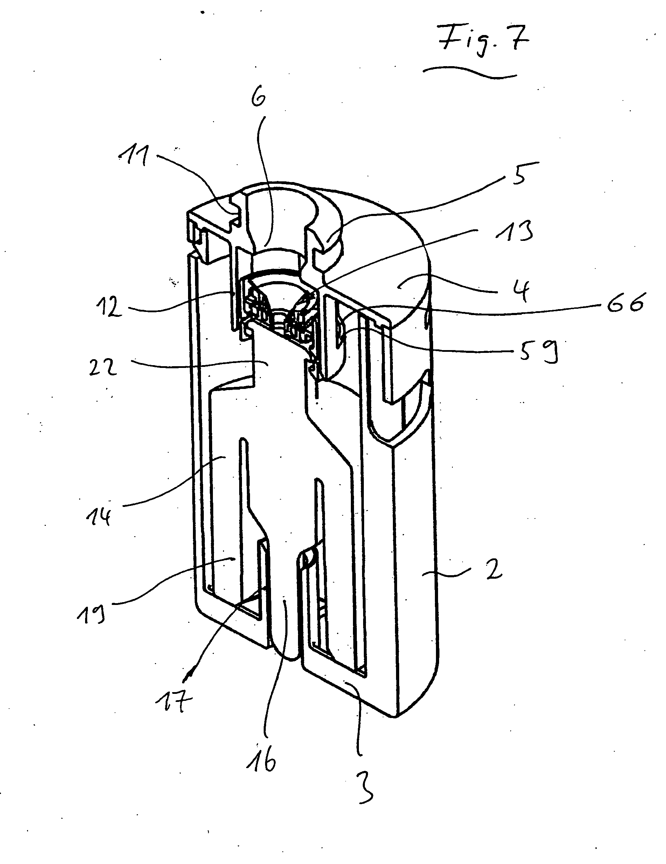

Der untere Träger 73 ist ähnlich gestaltet wie der mittlere Träger 72. Seine insgesamt drei in Umfangsrichtung gleichmäßig verteilten Arme 79 sind an ihren Freienden mit einem radial nach innen ragenden Vorsprung 80 versehen, welcher im Montagezustand den Flansch 23 des Schwimmers 14 hintergreift. In den Armen 79 sind sich nach oben öffnende Fenster 82 vorhanden. Außenseitig ist an die Arme 79 ein die Fenster 82 überbrückender Vorsprung 83 angeformt, welcher im Montagezustand in ein im Käfig 12 vorhandenes Fenster 59 hineinragt und mit dem unteren Rand 66 (Fig. 4,7) dieses Fensters im Sinne eines Anschlags zusammenwirkt. Diejenigen Bereiche eines Trägers 72,73, welche von den Armen 50, 75 eines darüber angeordneten Trägers 71, 72 bzw. von den an den Armen angeformten Vorsprüngen 52, 76 hintergriffen sind, sind radial nach innen zurückversetzt. Im Falle des mittleren Trägers 72 sind dies die sich in Umfangsrichtung zwischen den Armen 75 erstreckenden Bereiche 85 bzw. im Falle des unteren Trägers 73 die Bereiche 86. Das Ausmaß, um den die Bereiche 85,86 radial nach innen versetzt sind, entspricht etwa der Dicke der Arme 50 bzw. der Arme 75. Vorteil dieser Ausgestaltung ist, dass die Dichteinrichtung 70 sowie auch die weiter oben beschriebene Dichteinrichtung 13 eine geringe Baubreite bzw. einen geringen Außenumfang aufweist und dementsprechend einen geringen Einbauraum erfordert.

Das mit dem unterseitigen Dichtelement 57 des oberen Trägers 71 zusammenwirkende oberseitige Dichtelement 86 des mittleren Trägers 72 ist von einem den Durchgangskanal 74 bzw. dessen oberseitige Mündungsöffnung umgrenzenden Bereich der Oberseite des Trägers 72 gebildet. Auf der Unterseite des Trägers 72 ist ein Elastomerelement 87 angeordnet, das einen nach unten vorstehenden, den Durchgangskanal 74 bzw. dessen unterseitige Mündungsöffnung umgrenzenden Rand aufweist, welcher ein Dichtelement 88 bildet. Das Dichtelement 88 wirkt mit einem oberseitigen Dichtelement 89 des unteren Trägers 73 zusammen. Das Dichtelement 89 wird von einem Oberflächenbereich gebildet, welcher den zentralen Durchgangskanal 90 des unteren Trägers 73 bzw. dessen oberseitige Mündungsöffnung umgrenzt. Auf der Unterseite des unteren Trägers 72 ist ebenfalls ein Elastomerelement 92 angeordnet, an welchem ebenfalls ein nach unten vorstehender, den Durchgangskanal 90 bzw. dessen unterseitige Mündungsöffnung umgrenzender und ein mit dem Dichtelement 28 des Schwimmers 14 zusammenwirkendes Dichtelement 93 bildender Rand vorhanden ist. Die miteinander zusammenwirkenden Dichtelemente 55/56, 57/86, 88/89 und 93/28 schließen jeweils Öffnungsquerschnitte 61 und 94 bis 96 ein, wobei deren Größe in Richtung zum Schwimmer 14 hin abnimmt. Die Funktionsweise eines mit der Dichteinrichtung 70 ausgerüsteten Ventils entspricht jener des oben beschriebenen dreistufig arbeitenden Ventils, nur dass es aufgrund der zusätzlichen Stufe insbesondere hinsichtlich eines schnellen Wiederöffnens nach Auftreten eines Tankinnendrucks optimiert ist.

## Patentansprüche

1. Entlüftungsventil für den Kraftstofftank eines Kraftfahrzeugs, mit einem eine Belüftungsöffnung (6) aufweisenden Gehäuse (2) und einem im Gehäuse angeordneten, oberseitig eine mit der Belüftungsöffnung (6) zusammenwirkende Dichteinrichtung (13, 70) tragenden Schwimmer (14), der in Richtung der Mittellängsachse (15) des Ventilgehäuses beweglich ist, und mit einer mindestens dreistufigen Dichteinrichtung (13, 70), mit folgender Ausgestaltung:
- sie umfasst mehrere längs der Mittellängsachse (15) hintereinander angeordnete Träger (36, 37 und 71, 72, 73), die jeweils von einem koaxial zur Mittellängsachse (15) verlaufenden Durchgangskanal (35, 48, 74, 84, 90) durchsetzt sind,
- an den der Belüftungsöffnung (6) zugewandten Oberseiten und an den dem Schwimmer (14) zugewandten Unterseiten der Träger (36, 37 und 71, 72, 73) ist jeweils ein zur Mittellängsachse (15) koaxiales Dichtelement (45, 51, 55, 57, 86, 88, 89, 93) angeordnet,
- die Träger (36, 37 und 71, 72, 73) sind jeweils in Richtung der Mittellängsachse (15) des Ventilgehäuses (2) relativ zueinander und relativ zum Schwimmer (14) um eine vorgegebene Strecke zwischen einer Schließstellung und einer Öffnungsstellung beweglich,
- in der Schließstellung eines Trägers (36, 37 und 71, 72, 73) liegt dessen oberseitiges Dichtelement (51, 55, 86, 89) an einem Gegen-Dichtelement an, wobei dieses ein unterseitiges Dichtelement (57, 88) eines Trägers (37, 71, 72) oder ein die Belüftungsöffnung (6) umgreifendes Dichtelement (56) ist,
- das unterseitige Dichtelement (45, 93) des untersten Trägers (36, 73) wirkt mit einem am Schwimmer (14) fixierten Dichtelement (28) zusammen,
- jeweils zwei einander zugeordnete Dichtelemente umgrenzen einen Öffnungsquerschnitt (61, 62, 63, 94, 95, 96),
- die Größe der aufeinanderfolgenden jeweiligen Öffnungsquerschnitte nimmt zum Schwimmer (14) hin ab,
- in der Öffnungsstellung eines Trägers sind die jeweiligen Dichtelemente voneinander getrennt.

2. Entlüftungsventil nach Anspruch 1,
**dadurch gekennzeichnet,**
**dass** zwei benachbarte Träger (36/37, 71/72, 72/73) auf folgende Weise miteinander verbunden sind:
- an einem Träger (37, 71, 72) sind mehrere Arme (50, 75) vorhanden, die sich in Richtung der Mittellängsachse (15) über dessen Unterseite hinaus erstrecken und einen Radialabstand zur Mittellängsachse (15) aufweisen,
- im Bereich der Freienden der Arme (50, 75) ist jeweils ein Vorsprung (52, 76) vorhanden, der eine zum Schwimmer (14) weisende Anschlagfläche (64, 67, 77) des jeweils anderen Trägers (36, 72, 73) hintergreift.

3. Entlüftungsöffnung nach Anspruch 2,
**dadurch gekennzeichnet,**
**dass** ein von einem Vorsprung (52, 76) hintergriffener Bereich (65, 85, 86) eines Trägers radial zumindest um eine der Dicke eines Armes (39, 50, 75) entsprechendes Ausmaß radial nach innen zurückversetzt ist.

4. Entlüftungsventil nach Anspruch 2 oder 3,
**dadurch gekennzeichnet,**
**dass** ein Arm (39, 79) von einem in die Oberseite des Trägers (36, 73) ausmündenden Fenster (53, 82) durchbrochen ist, das zur Aufnahme zumindest des Freiendes des Armes (50) eines oberhalb des genannten Trägers (36, 73) angeordneten Trägers (37, 71) dient.

5. Entlüftungsventil nach Anspruch 4,
**dadurch gekennzeichnet,**
**dass** am untersten Träger (36, 73) der Dichteinrichtung (13, 70) ebenfalls mehrere sich in Richtung der Mittellängsachse (15) über die Unterseite des Trägers hinauserstreckende und einen Radialabstand zur Mittellängsachse (15) aufweisende Arme (39, 79) vorhanden sind, mit denen der Träger axial beweglich am Schwimmer (14) gehalten ist.

6. Entlüftungsventil nach Anspruch 5,
**dadurch gekennzeichnet,**
**dass** die Arme (39, 79) mit einem an ihren Freienden angeordneten radial nach innen ragenden Vorsprung (40, 80)eine von der Belüftungsöffnung (6) des Ventilgehäuses (2) weg weisende Anschlagfläche (24) am Schwimmer (14) hintergreifen.

7. Entlüftungsventil nach Anspruch 6,
**dadurch gekennzeichnet,**
**dass** die Anschlagfläche (24) die Unterseite eines am Freiende eines zentralen radial verengten Längsabschnitts (22) des Schwimmers (14) vorhandenen Flansches (23) gebildet ist.

8. Entlüftungsventil nach einem der vorhergehenden Ansprüche,
**dadurch gekennzeichnet,**
**dass** das unterseitige Dichtelement (45, 93) des untersten Trägers (36, 73) der Dichteinrichtung (13, 70) mit einem oberseits am Schwimmer (14) vorhandenen Dichtelement (28) zusammenwirkt.

9. Entlüftungsventil nach Anspruch 8,
**dadurch gekennzeichnet,**
**dass** das Dichtelement (28) mit Axialspiel am Schwimmer (14) gehalten ist.

10. Entlüftungsventil nach einem der vorhergehenden Ansprüche,
**dadurch gekennzeichnet,**
**dass** in einem oberen Bereich des Ventilgehäuses (2) ein die Dichteinrichtung (13, 70) aufnehmender Käfig (12) vorhanden ist.

11. Entlüftungsventil nach Anspruch 10,
**dadurch gekennzeichnet,**
**dass** der Käfig (12) von einer im Wesentlichen zylindrischen Umfangswand (12a) gebildet ist, die von wenigstens einem sich axial und über einen Teil des Käfigumfangs erstreckenden Fenster (59) durchbrochen ist.

## Claims

1. Vent valve for the fuel tank of a motor vehicle, the vent valve comprising a housing (2) having a vent opening (6), and a float (14) arranged in the housing, supporting on its upper side a sealing arrangement (13, 70) interacting with the vent opening (6), where the float (14) is movable in the direction of the center longitudinal axis (15) of the valve housing, and having an at least three-stage sealing arrangement (13, 70), having the following design:
- it comprises several supports (36, 37 and 71, 72, 73) arranged behind one another along the center longitudinal axis (15), where said supports are penetrated, in each case, by a through channel (35, 48, 74, 84, 90) running coaxially to the center longitudinal axis (15),
- on the upper sides facing towards the vent opening (6) and on the lower sides of the supports (36, 37 and 71, 72, 73) facing the float (14), a sealing element (45, 51, 55, 57, 86, 88, 89, 93) is arranged, in each case, coaxially to the center longitudinal axis (15),
- the supports (36, 37 and 71, 72, 73) are, in each case, movable relative to each other and relative to the float (14), in the direction of the center longitudinal axis (15) of the valve housing (2), by a predetermined distance between a closed position and an open position,
- in the closed position of a support (36, 37 and 71, 72, 73) its upper-side sealing element (51, 55, 86, 89) bears against a counter-sealing element, where this is a lower-side sealing element (57, 88) of a support (37, 71, 72) or a sealing element (56) surrounding the vent opening (6),
- the lower-side sealing element (45, 93) of the lowest support (36, 73) interacts with a sealing element (28) fixed to the float (14),
- in each case two sealing elements which are assigned to one another delimit an opening cross section (61, 62, 63, 94, 95, 96),
- the size of the successive opening cross-sections respectively decreases towards the float (14),
- in the opening position of a support, the sealing elements, in each case, are separated from each other.

2. Vent valve according to Claim 1, **characterized in that** two adjacent supports (36/37, 71/72, 72/73) are connected to one another in the following way:
- multiple arms (50, 75) are present on a support (37, 71, 72), where said arms extend beyond its lower side in the direction of the center longitudinal axis (15), and have a radial distance to the center longitudinal axis (15),
- in the region of the free ends of the arms (50, 75), a projection (52, 76) is present, in each case, which engages behind a stop face (64, 67, 77), pointing towards the float (14), of the respective other support (36, 72, 73).

3. Vent opening according to Claim 2, **characterized in that** a region (65, 85, 86) of a support engaged from behind by a projection (52, 76) is radially recessed back radially inwards at least by a dimension corresponding to the thickness of an arm (39, 50, 75).

4. Vent valve according to Claim 2 or 3, **characterized in that** an arm (39, 79) is penetrated by a window (53, 82) opening into the upper side of the support (36, 73), where said window serves for receiving at least the free end of the arm (50) of a support (37, 71) arranged above the named support (36, 73).

5. Vent valve according to Claim 4, **characterized in that** on the lowest support (36, 73) of the sealing arrangement (13, 70) also several arms (39, 79) are present that extend in the direction of the center longitudinal axis (15) beyond the lower side of the support and that have a radial distance to the central longitudinal axis (15), with which said arms the support is held on the float (14) in an axially movable manner.

6. Vent valve according to Claim 5, **characterized in that** the arms (39, 79), with a projection (40, 80) arranged on their free ends that protrudes radially inwards, engage from behind a stop face (24) on the float (14), facing away from the vent opening (6) of the valve housing (2).

7. Vent valve according to Claim 6, **characterized in that** the stop face (24) is formed by the lower side of a flange (23) present on the free end of a central, radially narrowed longitudinal section (22) of the float (14).

8. Vent valve according to one of the preceding claims, **characterized in that** the lower-side sealing element (45, 93) of the lowest support (36, 73) of the sealing arrangement (13, 70) interacts with a sealing element (28) present on the upper side of the float (14).

9. Vent valve according to Claim 8, **characterized in that** the sealing element (28) is held with axial play on the float (14).

10. Vent valve according to one of the preceding claims, **characterized in that** a cage (12) receiving the sealing arrangement (13, 70) is present in an upper region of the valve housing (2).

11. Vent valve according to Claim 10, **characterized in that** the cage (12) is formed from an essentially cylindrical peripheral wall (12a), which is penetrated by at least one window (59) extending axially and over a part of the cage circumference.

## Revendications

1. Soupape de purge pour le réservoir de carburant d'un véhicule automobile, comprenant un boîtier (2) ayant une ouverture (6) d'aération et un flotteur (14), qui est monté dans le boîtier, qui porte du côté supérieur un dispositif (13, 70) d'étanchéité coopérant avec l'ouverture (6) d'aération et qui est mobile dans la direction de l'axe (15) longitudinal médian du boîtier de soupape, et comprenant au moins un dispositif (13, 70) d'étanchéité à trois étages, ayant la conformation suivante :
- elle comprend plusieurs supports (36, 37 et 71, 72, 73), qui sont disposés successivement le long de l'axe (15) longitudinal médian et qui sont traversés respectivement par un canal (35, 48, 74, 84, 90) de traversée s'étendant coaxialement à l'axe (15) longitudinal médian,
- un élément (45, 51, 55, 57, 86, 88, 89, 93) d'étanchéité coaxial à l'axe (15) longitudinal médian et disposé respectivement sur les côtés supérieurs tournés vers l'ouverture (6) d'aération et sur les côtés inférieurs tournés vers le flotteur (14) des supports (36, 37 et 71, 72, 73),
- les supports (36, 37 et 71, 72, 73) sont mobiles respectivement dans la direction de l'axe (15) longitudinal médian du boîtier (2) de la soupape les uns par rapport aux autres et par rapport au flotteur (14) sur une distance prescrite entre une position de fermeture et une position d'ouverture,
- dans la position de fermeture d'un support (36, 37 et 71, 72, 73), son élément (51, 55, 86, 89) d'étanchéité du côté supérieur s'applique sur un élément antagoniste d'étanchéité, celui-ci étant un élément (57, 58) d'étanchéité du côté inférieur d'un support (37, 71, 72) ou un élément (56) d'étanchéité entourant l'ouverture (6) d'aération,
- l'élément (45, 93) d'étanchéité du côté inférieur du support (36, 73) le plus bas coopère avec un élément (28) d'étanchéité fixé au flotteur (14),
- respectivement deux éléments d'étanchéité associés l'un à l'autre délimitent une section (61, 62, 63, 94, 95, 96) transversale d'ouverture,
- la dimension des sections transversales d'ouverture respectives qui se succèdent diminue vers le flotteur (14),
- dans la position d'ouverture d'un support, les éléments d'étanchéité respectifs sont séparés les uns des autres.

2. Soupape de purge suivant la revendication 1,
**caractérisée**
**en ce que** deux supports (36/37, 71/72, 72/73) voisins sont reliés entre eux de la manière suivante :
- il y a sur un support (37, 71, 72) plusieurs bras (50, 75), qui s'étendent dans la direction de l'axe (15) longitudinal médian au-delà de son côté inférieur et qui sont à une distance radiale de l'axe (15) longitudinal médian,
- dans les zones des extrémités libres des bras (50, 75), il y a respectivement une saillie (52, 76), qui s'accroche derrière une surface (64, 76, 77) de butée, tournée vers le flotteur (14), de l'autre support (36, 72, 73) respectif.

3. Soupape de purge suivant la revendication 2,
**caractérisée**
**en ce qu'**une partie (65, 85, 86) d'un support accrochée par une saillie (52, 76) revient radialement vers l'intérieur dans une mesure correspondant radialement au moins à l'épaisseur d'un bras (39, 50, 75).

4. Soupape de purge suivant la revendication 2 ou 3, **caractérisée**
**en ce qu'**un bras (39, 79) est interrompu par une fenêtre (53, 82), qui débouche dans le côté supérieur du support (36, 73) et qui sert à recevoir au moins l'extrémité libre du bras (50) d'un support (37, 71) disposé au-dessus du support (36, 73) mentionné.

5. Soupape de purge suivant la revendication 4,
**caractérisée**
**en ce que**, sur le support (36, 73) le plus bas du dispositif (13, 70) d'étanchéité, il y a également plusieurs bras (39, 79) s'étendant dans la direction de l'axe (15) longitudinal médian au-delà du côté inférieur du support et étant à une distance radiale de l'axe (15) longitudinal médian, bras par lesquels le support est maintenu mobile axialement sur le flotteur (14).

6. Soupape de purge suivant la revendication 5,
**caractérisée**
**en ce que** les bras (39, 79) s'accrochent, par une saillie (40, 80) disposée à leur extrémité libre et en saillie radialement vers l'intérieur, à une surface (24) de butée du flotteur (14) éloignée de l'ouverture (6) d'aération du boîtier (2) de la soupape.

7. Soupape de purge suivant la revendication 6,
**caractérisée**
**en ce que** la surface (24) de butée est formée par le côté inférieur d'une bride (23) présente à l'extrémité libre d'une partie (24) longitudinale centrale et rétrécie radialement du flotteur (14).

8. Soupape de purge suivant l'une des revendications précédentes,
**caractérisée**
**en ce que** l'élément (45, 93) d'étanchéité du côté inférieur du support (36, 73) le plus bas du dispositif (13, 70) d'étanchéité coopère avec un élément (28) d'étanchéité présent du côté supérieur du flotteur (14).

9. Soupape de purge suivant la revendication 8,
**caractérisée**
**en ce que** l'élément (28) d'étanchéité est maintenu sur le flotteur (14) avec un jeu axial.

10. Soupape de purge suivant l'une des revendications précédentes,
**caractérisée**
**en ce qu'**il y a, dans une partie supérieure du boîtier (2) de la soupape, une cage (12) recevant le dispositif (13, 70) d'étanchéité.

11. Soupape de purge suivant la revendication 10,
**caractérisée**
**en ce que** la cage (12) est formée d'une paroi (12a) périphérique sensiblement cylindrique, qui est interrompue par au moins une fenêtre (59) s'étendant axialement et sur une partie du pourtour de la cage.
